(19) Europäisches Patentamt
European Patent Office
Office européen des brevets

(11) **EP 2 533 934 B1**

(12) **EUROPÄISCHE PATENTSCHRIFT**

(45) Veröffentlichungstag und Bekanntmachung des Hinweises auf die Patenterteilung:
**15.01.2014 Patentblatt 2014/03**

(21) Anmeldenummer: **11703382.9**

(22) Anmeldetag: **25.01.2011**

(51) Int Cl.:
**B23K 26/06** (2006.01)     **B23K 26/38** (2006.01)
**G06F 17/50** (2006.01)

(86) Internationale Anmeldenummer:
**PCT/EP2011/000285**

(87) Internationale Veröffentlichungsnummer:
**WO 2011/095290 (11.08.2011 Gazette 2011/32)**

(54) **VERFAHREN ZUM BESTIMMEN DES SCHNEIDERGEBNISSES EINES LASERSCHNEIDPROZESSES UNTER VERWENDUNG EINES SIMULATION-PROGRAMMS**

METHOD FOR DETERMINING THE CUT QUALITY OF A LASER CUTTING PROCESS USING A SIMULATION PROGRAM

PROCÉDÉ DE DÉTERMINATION DU RÉSULTAT DE COUPE D'UN PROCESSUS DE COUPE AU LASER

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **08.02.2010 DE 102010007323**

(43) Veröffentlichungstag der Anmeldung:
**19.12.2012 Patentblatt 2012/51**

(73) Patentinhaber:
• **Fraunhofer-Gesellschaft zur Förderung der angewandten Forschung**
**80686 München (DE)**
• **Rheinisch-Westfälisch-Technische Hochschule Aachen**
**52056 Aachen (DE)**

(72) Erfinder:
• **SCHULZ, Wolfgang**
**52379 Langerwehe (DE)**
• **SCHÜTTLER, Jens**
**52064 Aachen (DE)**
• **VOSSEN, Georg**
**40215 Düsseldorf (DE)**
• **NIESSEN, Markus**
**52382 Niederzier (DE)**

(74) Vertreter: **Grimm, Ekkehard**
**Edith-Stein-Strasse 22**
**63075 Offenbach/Main (DE)**

(56) Entgegenhaltungen:
**JP-A- 4 052 091    US-A- 5 854 751**

• **W. Schutz et al: "Modeling and Simulation of Process Monitoring and Control in Laser Cutting"; "23" In: G. RADON and R. NEUGEBAUER: "Nonlinear Dynamics of Production systems", 2004, VCH erlag GmbH & Co. KGaA, Weinheim, XP002639295, ISBN: 3-527-40430-9 Seiten 411-426, Seite 418, Absatz 2 - Seite 419, Absatz 1; Abbildung 23.3 Seite 423, letzter Absatz - Seite 424, Absatz 5**
• **W. SCHUTZ ET AL: "Dynamics of ripple formation and melt flow in laser beam cutting", J. PHYS. D: APPL. PHYS., Bd. 32, 19. März 2008 (2008-03-19), Seiten 1219-1228, XP002639296,**

EP 2 533 934 B1

**Beschreibung**

Die vorliegende Erfindung betrifft ein Verfahren zum Bestimmen des Schneidergebnisses eines Laserschneidprozesses gemäß dem Oberbegriff des Anspruchs 1 (siehe, z. B., W. SCHULTZ et al: "Modeling and simulation of process monitoring and Control in laser cutting" in G. RADON and R. NEUGEBAUER, "Non linear Dynamic of Production system" 2004, VCH erlag GmbH & Co. KGaA, Weinheim, ISBN 3-527-40430-9, pp 411-426).

Das Laserschneiden ist ein etabliertes Trennverfahren. Unter den lasergestützten Fertigungsverfahren nimmt es in der industriellen Anwendung die führende Position ein. Aus Anwendersicht wird für solche Fertigungsverfahren hohe Produktivität bei hoher Qualität gefordert.

Für das Laserschneiden im Bereich der Makro-Anwendung für einen Blechdickenbereich von 1 mm bis 30 mm werden derzeit Hochleistungs-$CO_2$-Laser ($10\mu$-Strahler) mit einer Wellenlänge der Strahlung von ca. 10 $\mu$m und mit einer Laserleistung von 1- 6 kW industriell eingesetzt. Zusätzlich sind heute neue Strahlquellen, wie Faserlaser und Scheibenlaser ($1\mu$-Strahler) mit einer Wellenlänge der Strahlung von ca. 1 $\mu$m, mit einer Laserleistung von derzeit 1-8 kW und deutlich besserer Strahlqualität als der $CO_2$-Laser verfügbar. Solche $1\mu$-Strahler bieten wesentliche wirtschaftliche Vorteile gegenüber den etablierten $10\mu$-Strahlern. Allerdings besitzen $1\mu$-Strahler im Vergleich zu $10\mu$-Strahlern eine schlechtere Schnittqualität, was dem Einsatz dieser $1\mu$-Strahler entgegensteht.

Die Qualität von Schnitten entlang eines Werkstückes kann anhand der Morphologie einer sich auf der Schnittfläche ausbildenden Riefenstruktur und einer Bartbildung durch aufgeschmolzenes Material an der unteren Kante der Schnittfläche beurteilt werden. Gefordert sind neben Ebenheit und Rechtwinkligkeit der Schnittfläche geringe Riefenbildung und Bartbildung.

Die Prozesskette Schneiden-Schweißen ist ein Beispiel, an dem zu erkennen ist, welche Bedeutung die Qualität der Schnittfläche für die Vorbereitung eines Fügespalts hat. Um schlanke Schweißnähte, die keine Nacharbeit durch Schleifen und Richten erfordern, mit dem Laser herstellen zu können, ist ein Zuschnitt der zu fügenden Bauteile mit ebenen, rechtwinkligen sowie glatten Bart- und oxidfreien Schnittflächen erwünscht.

Aus vorstehenden Gründen wurde der Mechanismus, der zu der Bildung von Riefen und Bart sowie Oxidschichten entlang der Schnittfläche und der Schnittkante eines Werkstücks führt, untersucht.

- Auf der Schnittfläche entstehen Riefen, deren Amplitude ab einer bestimmten Schnitttiefe sprungartig zunimmt, also ein Wechsel von feineren zu gröberen Riefen auftritt.

- Die Amplitude der groben Riefen wird mit zunehmender Dicke des zu schneidenden Materials größer.

- Die gröberen Riefen sind wiederholt unterbrochen bzw. weisen einen unregelmäßigen Abstand (Anzahl der Riefen in Schnittrichtung wechselt mit der Schnitttiefe) auf. Diese axiale Struktur bzw. eine Unterbrechung der Riefen erzeugt eine unregelmäßige Struktur der Schnittfläche und ist unerwünscht. Die erreichbare Amplitude der Riefen ist heute für den $10\mu$-Strahler kleiner als für den $1\mu$-Strahler.

- Insbesondere im unteren Teil der Schnittfläche oder bei großen Materialdicken entstehen Riefen mit den größten Amplituden, die durch das Erstarren von schmelzflüssigem Metall auf der Schnittfläche hervorgerufen werden.

- Insbesondere bei großer Vorschubgeschwindigkeit löst die Schmelze nicht vollständig von der Unterkante ab. Die anhaftende und dann erstarrende Schmelze bildet den unerwünschten Bart. Die Mechanismen zur Entstehung von Bart sind nur zu einem Teil verstanden, was dazu führt, dass die möglichen Werte für die Produktivität von Schneidanlagen heute bei weitem nicht ausgenutzt werden.

- Die Bildung von Rissen und Poren in der Schweißnaht kann durch oxidierte Fügekanten verursacht werden, wie sie beim Brennschneiden entstehen. Daher wird das Schmelzschneiden mit inertem Schneidgas durchgeführt, um oxidfreie Schnittflächen zu erhalten.

Das Dokument EP-B1 0929 376 beschreibt ein Verfahren zur Laserstrahlbehandlung, das zum Schneiden großer Materialdicken von 15 mm und mehr besonders geeignet sein soll. Nach diesem Verfahren werden mehrere Foki erzeugt, die in axialer Richtung entlang der Dicke des Materials positioniert werden, um eine große Tiefenwirkung der Laserstrahlung zu erzeugen. Allerdings zeigt sich, dass, ungeachtet der in diesem Dokument empfohlenen Maßnahmen, die Bildung von Riefen und Bart unverändert stark auftreten. Außerdem führen die Anteile der Laserstrahlung mit tiefer liegendem Fokus an der Oberkante des Materials zu einer unerwünschten Aufweitung (Verrundung) der Schnittfuge.

Zur Einführung des Qualitätsschnittes mit dem $1\mu$-Strahler für mehr als 2mm Blechdicke und zur Erweiterung des Qualitätsschnittes mit dem 10μ-Strahler auf Blechdicken größer 15mm reicht der Stand der Technik heute nicht aus. Die Gründe für diese technischen Grenzen sind, dass

- eine Erweiterung der Grenzen für die Schnittqualität - nach der vorliegenden experimentellen Erfahrung mit 1μ-Strahler sowie 10μ-Strahlern und mit den heute einstellbaren Werten für die Laser- und Verfahrensparameter - nicht erreichbar ist
- das vorhandene Verständnis über die Entstehung von Riefen und Bart nicht ausreicht, um z. B. die notwendigen, grundlegend neuen Wirkungen einer Strahlformung zu erkennen und nachfolgend Maßnahmen zur Strahlformung angeben zu können.

Aus diesen Gründen werden von Fachleuten heute lediglich Maßnahmen zur Verbesserung des Schneidens mit dem 1μ-Strahler vorgeschlagen, die aus den Erfahrungen vom Schneiden mit dem 10μ-Strahler bekannt sind. Diese Maßnahmen führten bisher nicht zum Erfolg, so dass der 1μ-Strahler die Schnittqualität des 10μ-Strahlers noch immer nicht erreichen kann. Darüber hinaus ist keine physikalische Ursache bekannt, mit der die unterschiedliche Schnittqualität erklärt werden könnte.

Nach dem Stand der Technik und Wissenschaft ist nachgewiesen, dass mindestens zwei Arten von Riefen vorliegen, nämlich Schmelzriefen und Erstarrungsriefen, deren Morphologie einen Hinweis auf den zugrunde liegenden Entstehungsmechanismus geben.

Das Dokument Schulz, W. [u.a.]: Simulation of Laser Cutting. In: The Theory of Laser Materials Processing. Edited by J. Dowden. Springer Series in Materials Science, 2009, Vol. 119, S. 21-69. ISBN 13 978-1-4020-9339-5, beschreibt die Simulation des Laserschneidens. Unter anderem sind hierfür Differentialgleichungen angegeben. Auch befasst sich dieses Dokument mit der Weberzahl. Das Dokument Schulz, W. [u.a.]: Dynamics or ripple formation and melt flow in laser beam cutting. In: J. Phys. D: Appl. Phys., 1999, Vol. 32, S. 1219-1228, untersucht das dynamische Verhalten der Riefenbildung und des Schmelzflusses beim Laserschneiden von Metallen. Entsprechend den Angaben in diesen beiden Dokumenten ist es möglich, die Bildung von Riefen beim Laserstrahlschneiden zu berechnen, und zwar immer unter Vorgabe von Störungen, die von außen auf das System einwirken. Auch werden nach diesen Dokumenten nur Schmelzriefen betrachtet.

Das Dokument W. Schulz et al: "Modeling and Simulation of Process Monitoring and Control in Laser Cutting"; "23" in Nonlinear Dynamics of production systems, edited by G. RADON and R. NEUGEBAUER, VCH Verlag GmbH & Co. KGaA, Weinheim offenbart ein Simulations-Verfahren eines Laserschneidens, so dass Riefen und Bart nicht mehr während eines Laserschneidens erzeugt werden kann, durch Verwendung alternativer Simulations-Prozesse.

Die US 5 854 751 A offenbart auch eine andere Lösung, um Riefen und Bart in einem Laser-Schneidverfahren zu minimieren, durch Verwendung einer mathematischen Gleichung für die Temperatursteuerung.

Die JP 4 052091 A beschreibt einen Simulator, der in einem Laserbearbeitungssystem eingesetzt ist, mit dem die Bewegungen des Systems durch eine Simulation abgeschätzt werden.

Schmelzriefen entstehen an der Oberseite der Schnittfläche allein durch Bewegung der Schmelzfront unter Abwesenheit erstarrter Schmelze und haben eine kleine Amplitude im Vergleich zu den Erstarrungsriefen und sind technisch von untergeordneter Bedeutung.

Erstarrungsriefen entstehen in größerer Schnitttiefe, typischerweise 1 bis 2 mm unterhalb der Oberkante des zu schneidenden Bleches, durch wellenförmige Ausbildung der Schmelzfront und durch wellenförmig erstarrende Schmelze und haben eine große Amplitude im Vergleich zu den Schmelzriefen und sind technisch von großer Bedeutung.

Nach dem Stand der Technik und Wissenschaft ist nicht geklärt, wie die Entstehung von Riefen und Bart mit den Laser-, Maschinen und Materialparametern zusammenhängen. Aus diesem Grund wird auch das Herstellen eines Qualitätsschnittes mit den neuen Laserstrahlquellen (z. B. Faserlaser) noch immer nicht beherrscht, was die weite Anwendung der neuen Strahlquellen verhindert und weltweit Gegenstand der Forschung ist.

Der vorliegenden Erfindung liegt die Aufgabe zugrunde, ein Verfahren anzugeben, mit dem die Schneidergebnisse eines Laserschneidprozesses, unter Einsatz bestimmter Parameter sowohl für eine möglicherweise einzusetzende reale Laserschneidmaschine als auch bestimmter Parameter des zu schneidenden Materials sowie erforderliche Prozessparameter bestimmt werden können. Auch soll die Möglichkeit gegeben sein, die Rauheit der Schnittfläche gezielt einstellen zu können.

Diese Aufgabe wird durch ein Verfahren mit den Merkmalen des Anspruchs 1 gelöst. Vorteilhafte Ausgestaltungen des Verfahrens ergeben sich aus den abhängigen Ansprüchen.

Das erfindungemäße Verfahren ermöglicht das Bestimmen des Schneidergebnisses eines Laserschneidprozesses. Nach diesem Verfahren wird das Ergebnis des Schneidvorgangs, der mit einer bestimmten Laserschneidmaschine durchgeführt werden soll, anhand der Ausbildung von Erstarrungsriefen entlang der Schnittfläche und/oder einer Bartbildung an der Unterkante der Schnittfläche beurteilt. Dieses Verfahren wird nicht an einer realen Laserschneidmaschine durchgeführt. Vielmehr wird in einem Simulations-Programm eine virtuelle Laserschneidmaschine bereitgestellt, die mit einem Satz von Werten $P_0$ aus einem Parameterraum P virtuell betrieben werden kann.

Dieser Parameterraum P ist definiert durch

$$P = (\lambda_{Laser}, I_0(t), f(x,z,t), \underline{s}(x,z,t), \underline{p}(x,z,t), P_g(x,z,t), \tau_g(x,z,t), v_0(t), d, P_{Material}),$$

mit

$$P_{Material} = (\rho_s, c_{ps}, \lambda_s, \rho_\ell, c_{p\ell}, \lambda_\ell, H_m, H_v, T_m, T_v, \eta, \sigma, n_{cs}, n_{c\ell}),$$

wobei

$\lambda_{Laser}$ die Wellenlänge der Laserstrahlung,
$I_0(t)$ den Maximalwert der Intensität der Laserstrahlung über die Zeit,
$f(x,z,t)$ die räumliche Verteilung der Intensität der Laserstrahlung über die Zeit,
$\underline{s}(x,z,t)$ die räumliche Verteilung der Richtung der Laserstrahlung über die Zeit,
$\underline{p}(x,z,t)$ die räumliche Verteilung des Polarisationszustandes der Laserstrahlung über die Zeit,
$P_g(x,z,t)$ der Druck des Schneidgases über die Zeit,
$\tau_g(x,z,t)$ die Scherspannung des Schneidgases über die Zeit,
$v_0(t)$ die Vorschubgeschwindigkeit, definiert als relative Geschwindigkeit
zwischen Laserstrahlachse und Werkstück, über die Zeit,
d die Blechdicke des zu schneidenden Materials,
$\rho_s$ die Dichte des zu schneidenden Materials im festen Zustand,
$c_{ps}$ die spezifische Wärmekapazität des Materials im festen Zustand,
$\lambda_s$ die Wärmeleitfähigkeit des Materials im festen Zustand,
$\rho_\ell$ die Dichte der Schmelze,
$c_{p\ell}$ die spezifische Wärmekapazität der Schmelze,
$\lambda_\ell$ die Wärmeleitfähigkeit der Schmelze,
$H_m$ die Schmelzenthalpie des zu schneidenden Materials,
$H_v$ die Verdampfungsenthalpie des zu schneidenden Materials,
$T_m$ die Schmelztemperatur des zu schneidenden Materials,
$T_v$ die Verdampfungstemperatur des zu schneidenden Materials,
$\eta$ die dynamische Viskosität der Schmelze,
$\sigma$ die Oberflächenspannung der Schmelze,
$n_{cs}$ der komplexe Brechungsindex des Materials im festen Zustand,
$n_{c\ell}$ der komplexe Brechungsindex der Schmelze
bezeichnen, und wobei
x die Koordinate in Richtung der Relativbewegung zwischen Material und Laserstrahlachse und
z die Koordinate senkrecht zur Materialoberseite, sowie
t die Zeit

bezeichnen.

Verfahrensgemäß werden in einem Schritt a) für den Ablauf des Simulations-Programms der Parametersatz $P_0$ in die virtuelle Schneidmaschine eingegeben.

Dann wird in einem Schritt b) in einem virtuellen Schneidvorgang mit der virtuellen Schneidmaschine ein Schnitt im virtuellen Werkstück erzeugt, indem die zeitliche Entwicklung der Schmelzfilmdicke h=h(z,t) und der Position M=M(z,t) der Schmelzfront am Scheitel der Schneidfront in Abhängigkeit der Schnitttiefe z (0<z<d, d Blechdicke) und der Zeit t aus den auf $\mathbf{v_0}$ normierten partiellen Differentialgleichungen DGL

$$\frac{\partial h}{\partial t} + G(z,t;h,P_0)\frac{\partial h}{\partial z} + D(z,t;h,P_0) = v_p, \qquad \frac{\partial M}{\partial t} = v_p - 1$$

mit Anfangs- und Randwerten

$$h(z,t=0)=h_0(z), \ M(z,t=0)=M_0(z)$$

$$h(z=0,t)=0, \qquad M(z=0,t)=m_0(t;P_0)$$

wobei $h_0(z)$ und $M_0(z)$ beliebige Anfangsverteilungen, $m_0(t;P_0)$ die Position der Oberkante der Schneidfront, $v_p=v_p(z,t)$ die Geschwindigkeit der Schmelzfront, $v_s=G(z,t; h, P_0)$ die Strömungsgeschwindigkeit an der Oberfläche der Schmelze und $D(z,t;h,P_0)$ eine Dämpfung der Schmelzfilmdynamik bezeichnen, für einen gegebenen Parametersatz $P_0$ aus P berechnet wird.

Dann wird in einem Schritt c) durch eine Projektion des zeitlichen Verlaufs der Absorptionsfront, definiert als die Position $M(z,t)-h(z,t)$, auf die Schnittfläche mit einer durch die Vorschubgeschwindigkeit $v_0$ bestimmten Übertragungsfunktion, die t auf x abbildet, die räumliche Verteilung der Riefenamplitude $R(x,z)$ auf der Schnittfläche angegeben. Zusätzlich oder alternativ wird aus dem zeitlichen Verlauf der Schmelzfilmdicke $h(z=d,t)$ und der Ausströmgeschwindigkeit $G(z=d,t; h(z=d,t), P_0)$ an der Unterkante der Schnittfläche eine räumliche Verteilung des Bartes $B(x)$ an der Unterkante der Schnittfläche berechnet.

Schließlich wird in einem Schritt d) ein virtuelles Schneidergebnis, welches $R(x,z)$ und/oder $B(x)$ umfasst, für eine weitere Auswertung bereitgestellt.

Mit dem erfindungsgemäßen Verfahren wird somit eine virtuelle Schneidmaschine genutzt, um die Ausbildung von Erstarrungsriefen an einer virtuellen Schnittfläche und die Ausbildung von Bart an der Unterseite der virtuellen Schnittfläche zu berechnen, wozu die Differentialgleichungen DGL herangezogen werden. Insbesondere kann mit dem Verfahren eine zeitliche Modulation der Parameter des Schneidens angegeben werden, mit der die räumliche Verteilung der Riefenamplitude auf der Schnittfläche eingestellt werden kann. Bei der Differentialgleichung $\frac{\partial M}{\partial t} = v_p - 1$ handelt es sich um eine dimensionslose Gleichung; die Größen sind auf die Bezugsgröße, die Vorschubgeschwindigkeit $v_0$, skaliert, wobei die Vorschubgeschwindigkeit $v_0$ als die relative Geschwindigkeit zwischen Laserstrahlachse und Werkstück definiert ist. Auch die Differentialgleichung für $v_p$ ist auf $v_0$ skaliert.

Diese Möglichkeit, die Riefenamplitude auf der Schnittfläche definiert einstellen zu können, kann nicht nur dazu genutzt werden, die Riefen möglichst klein zu halten, sondern auch dazu, ein Bild oder ein Schriftzug auf der Schnittfläche darzustellen. Ein Anwendungsbereich des erfindungsgemäßen Verfahrens besteht aber darin, diejenigen Parameter des Schneidens anzugeben, für die die physikalische Grenze einer möglichst kleinen Riefenamplitude erreicht wird. Die Angabe "eine möglichst kleine Riefenamplitude" bedeutet hierbei, dass trotz einer Optimierung der Schneidbedingungen Riefen unter bestimmten Schneidbedingungen verbleiben, die durch technisch unvermeidbare Schwankungen der Parameter des Schneidens auftreten und daher nicht beseitigt, sondern nur zu kleineren Werten hin begrenzt werden können.

In dem Simulations-Programm, das die Basis des erfindungsgemäßen Verfahrens darstellt, wird die Erkenntnis genutzt, dass Erstarrungsriefen und Bart durch Anfachung von axial laufenden Wellen am Scheitel der Schneidfront, das bedeutet Abtragsschwankungen am Scheitel der Schneidfront, entstehen und dass zwei physikalische Ursachen dafür vorliegen.

Es liegt die Erkenntnis vor, dass Riefen und Bart

- aufgrund einer dem Schneiden innewohnenden Instabilität, deren Stabilitätsgrenze angegeben wird, und aufgrund äußerer Störungen, die
- aus unvermeidbaren Schwankungen von Laser- und Maschinenparametern,
- oder aus räumlichen Schwankungen der Materialeigenschaften (z. B. Korngrenzen),
- oder aus bewusst eingestellten Modulationen der Parameter des Schneidverfahrens (z. B. Modulation der Laserstrahlung oder der Schneidgasströmung),

entstehen.

Dem Simulations-Programm liegt ein physikalisches Riefenmodell zugrunde, mit dem die räumliche Verteilung der Riefenamplitude R auf der Schnittfläche berechnet werden kann. Die Riefenamplitude $R = R(x,z)$ hängt von der Schnittposition x entlang der Schnittfläche und der Schnitttiefe z sowie von Parametern P des Schneidens ab.

Der Satz von Werten $P_0$ aus dem Parameterraum P umfasst Laser-, Maschinen- und Materialparameter und berücksichtigt unter anderem räumlich verteilte Größen wie die Intensität der Laserstrahlung und die antreibenden Kräfte - das sind der räumliche Gradient des Gasdruckes und die Scherspannung des Gases an der Oberfläche des Schmelzfilms - der Schneidgasströmung auf die auszutreibende Schmelze.

Wesentlich ist auch, dass dieser Satz von Parametern neben den Mittelwerten der Parameter auch deren technisch nicht vermeidbaren Schwankungen enthält.

Weiterhin enthält dieser Satz von Parametern neben den Mittelwerten der Parameter und deren technisch nicht vermeidbaren Schwankungen auch bewusst eingestellte zeitliche Modulationen. Durch eine zeitliche Modulation der Parameter kann die Produktivität, z. B. Schneidgeschwindigkeit des Schneidens, vergrößert werden, wobei diese Optimierung durch das Simulations-Programm an einer virtuellen Laserschneidmaschine und damit unter geringem Kostenaufwand vorgenommen werden kann. Diese Optimierungsmöglichkeit ist dadurch gegeben, dass durch eine zeitliche Modulation der Parameter die Riefenmorphologie gezielt eingestellt werden kann, so dass definierte Strukturen der Riefen, bis hin zu einer Minimierung der Riefenstruktur, erzeugt werden können. Diese Modulation kann letztendlich auch dazu genutzt werden, einen Schriftzug oder ein Bild auf der Schnittfläche beim Schneiden auszubilden.

Auch wird in dem Simulations-Programm die Bildung von Bart an der Schnittfläche berücksichtigt, indem die Eigenschaften des entstehenden Bartes unter Ausnutzung des physikalischen Riefenmodells und aus der berechneten Riefenamplitude R (x,z) an der Unterseite der Schnittfläche berechnet und berücksichtigt werden.

Ein Bart kann durch folgende Größen charakterisiert werden

- die Bartbreite $b_B$ in Vorschubrichtung und folglich die Strecke, gemessen in Vorschubrichtung, wo die erstarrte Schmelze an der Unterseite des Bleches bzw. an der unteren Kante der Schnittfläche anhaftet,

- das Bartvolumen $V_B$; das Volumen an erstarrter Schmelze, das unterhalb des geschnittenen Bleches, das bedeutet unterhalb der unteren Schnittkante, anhaftet,

- die Barthöhe $h_B$; das ist die Höhe der erstarrten Schmelze, die unterhalb des geschnittenen Bleches anhaftet.

Somit wird in dem Simulations-Programm auch berücksichtigt, ob der Bart aus einer Art Bartperlen oder einer Art Bartfäden besteht. Eine Bartperle entsteht per Definition dort, wo die Barthöhe $h_B$ kleiner oder gleich der Bartbreite $b_B$ ist, während ein Bartfaden dann entsteht, wenn die Barthöhe $h_B$ größer als die Bartbreite $b_B$ ist.

In dem Satz von Werten $P_0$ des Parameterraums P werden auch thermophysikalische Parameter, wie beispielsweise Schmelztemperatur $T_m$ und Verdampfungstemperatur $T_v$ der Schmelzfilmoberfläche an der Unterkante, und Materialparameter, wie zum Beispiel die Oberflächenspannung der Schmelze, berücksichtigt.

Das erfindungsgemäße Verfahren ist für das Laserschneiden sowohl mit reaktivem Schneidgasstrahl als auch für das Laserschneiden mit inertem Schneidgasstrahl einsetzbar. In Bezug auf das letztere Verfahren werden die Verfahrensvarianten Laserstrahlschmelzschneiden, Schnellschneiden und Hochgeschwindigkeitsschneiden unterschieden.

Aufgrund des Simulations-Programms und unter Vorgabe einer virtuellen Laserschneidmaschine, die ideale Voraussetzungen erfüllt sowie universell einstellbar ist, können durch Variation der Parameterwerte $P_0$, indem die Schritte a) bis d) mit jeweils veränderten Parametern aus dem Parameterraum P wiederholt werden, die theoretisch optimalen Werte $P_{opt}$ für die Parameter P für jeweils eine vordefinierte Riefenmorphologie (z. B. minimale Rauheit) und einen bartfreien Schnitt ermittelt werden.

Die heute verfügbaren Schneidmaschinen sind technisch nicht perfekt und weisen je nach Hersteller einen eingeschränkten Designraum auf. Die sich aus dem erfindungsgemäßen Verfahren in der Anwendung des Simulations-Programms ergebenden theoretisch optimalen Sätze von Parametern aus der virtuellen Schneidmaschine können nicht immer mit einer realen Schneidmaschine umgesetzt werden. Daher können die Ergebnisse, die mit dem Simulations-Programm erhalten werden, dazu verwendet werden, eine reale Laserschneidmaschine in bestimmten Parametern zu verbessern oder auch neu zu dimensionieren, indem anhand der Ergebnisse aus dem Simulations-Programm die Ursachen bzw. die Parameter ermittelt werden, die zu einer unerwünschten Ausprägung der Riefenamplitude und/oder zu einer unerwünschten Bartbildung führen. Dazu werden die einzelnen Wert $P_0$ aus dem Parameterraum P betrachtet und analysiert, um dann solche Werte aus dem Parameterraum P auszuwählen und zu verändern, die zu der besten Annäherung der Werte $P_0$ aus dem Parameterraum P führen.

Eine solche Annäherung erfolgt somit auf einem virtuellen Weg und kann auch durch iterative Veränderungen der Werte $P_0$ aus dem Parameterraum P erfolgen. Falls erforderlich können die aufgefundenen, angenäherten Parameter in realen Schneidversuchen überprüft werden. Aus den über das Verfahren gewonnenen Erkenntnissen können erforderliche Verfahrensparameter oder auch Randbedingungen für die erforderlichen Komponenten der Laserschneidmaschine abgeleitet werden, die z. B. die Formung von Laserstrahlung und die Schneidgasströmung betreffen.

Ein wesentlicher Schritt des erfindungsgemäßen Verfahrens liegt in der mathematischphysikalischen Berechnung von Riefen auf der Schnittfläche und der Bartbildung. Diese Berechnung basiert auf einem hochdimensionalen Satz gekoppelter, nichtlinearer, partieller Integro-Differentialgleichungen (Differentialgleichungen, die neben den Ableitungen auch Integrale der dynamischen Variablen enthalten) mindestens fünfter Ordnung, wobei einige der beteiligten partiellen Differentialgleichungen vom bekannten Typ der Kuramoto-Sivashinsky-Gleichung sind. Allerdings basiert das erfindungsgemäße Verfahren, um diese komplexe Aufgabe zu lösen, auf einem durch die Erfinder entwickelten, stark vereinfachten System aus nur zwei partiellen Differentialgleichungen erster Ordnung für nur zwei dynamische Variablen, um die Differentialgleichungen höherer Ordnungen zu ersetzen.

Mit diesen zwei Differentialgleichungen,

$$\frac{\partial h}{\partial t} + G(z,t;h,P_0)\frac{\partial h}{\partial z} + D(z,t;h,P_0) = v_p, \quad \frac{\partial M}{\partial t} = v_p - 1$$

mit Anfangs- und Randwerten

$$h(z,t=0)=h_0(z), \quad M(z,t=0)=M_0(z)$$

$$h(z=0,t)=0, \qquad M(z=0,t)=m_0(t;P_0)$$

wobei $h_0(z)$ und $M_0(z)$ beliebige Anfangsverteilungen, $m_0(t;P_0)$ die Position der Oberkante der Schneidfront, $v_p=v_p(z,t)$ die Geschwindigkeit der Schmelzfront, $v_s=G(z,t; h, P_0)$ die Strömungsgeschwindigkeit an der Oberfläche der Schmelze und $D(z,t;h,P_0)$ eine Dämpfung der Schmelzfilmdynamik bezeichnen, wird die zeitliche Entwicklung der Schmelzfilmdicke $h=h(z,t)$ und der Position $M=M(z,t)$ der Schmelzfront am Scheitel der Schneidfront in Abhängigkeit der Schnitttiefe z ($0<z<d$, d Blechdicke) und der Zeit t berechnet.

Für die restlichen Größen, die in das Modell, das dem Simulations-Programm zugrunde liegt, eingehen können und am Scheitel der Schneidfront anzugeben sind, können verschiedene aus der Literatur bekannte physikalische Modelle herangezogen werden, um die Größen

- Position $m_0(t;P_0)$ der Oberkante der Schneidfront,
- Geschwindigkeit $v_p=v_p(z,t)$ der Schmelzfront
- Strömungsgeschwindigkeit $v_s=G(z,t; h, P_0)$ an der Oberfläche der Schmelze
- Dämpfung $D(z,t; h, P_0)$ der Schmelzfilmdynamik

zu bestimmen.

Zur Berechnung dieser Größen können verschiedene Approximationsstufen angegeben werden.

Es ist zu berücksichtigen, dass die Geschwindigkeit $v_p$ der Schmelzfront $v_p=N[M-h, Q_A]$ die beiden Differentialgleichungen nichtlinear miteinander koppelt. Die Geschwindigkeit $v_p$ der Schmelzfront wird durch einen nichtlinearen Operator N berechnet, der noch von der absorbierten Energiestromdichte $Q_A$ abhängt.

Die absorbierte Energiestromdichte $Q_A$,

$$Q_A = \mu A(\mu) I_0 f(x,z;t)\big|_{x=M-h}, \quad \mu = \cos(\underline{s} \cdot \underline{n}),$$

wird aus dem Kosinus des Einfallwinkels $\mu$, dem Absorptionsgrad $A(\mu)$ der Maximalintensität $I_0$ und der Verteilung f ($0<f<1$) der Intensität der Laserstrahlung berechnet. Der Einfallswinkel wird durch den Richtungsvektor $\underline{s}$ der Energiestromdichte des Lasers und den Normalenvektor $\underline{n}$ der Oberfläche des Schmelzfilms eingeschlossen. Die Verteilung f ($0<f<1$) der Intensität hängt von den Raumkoordinaten x, z, wobei x die Vorschubrichtung und z die Ausbreitungsrichtung der Strahlung angibt, und von Parametern $P_f$, mit denen die Verteilung f parametrisiert wird, ab.

Die Strömungsgeschwindigkeit $v_s=G(z,t; h, P_0)$ an der Oberfläche x=M-h der Schmelze wird durch eine Funktion G angegeben, die aus der Strömung des Schneidgases und der Strömung der Schmelze bestimmt wird.

Die Dämpfung $D(z,t;h,P_0)$ in den Differentialgleichungen DGL kann in bestimmten Modellen auf Null gesetzt werden und bleibt damit unberücksichtigt.

Die Eigenschaften des entstehenden Bartes werden unter Ausnutzung des physikalischen Riefenmodells und aus der damit berechneten Riefenamplitude $R(x,z=d)$ an der Unterkante der Schnittfläche erfindungsgemäß wie folgt berechnet:

Die Bartbreite $b_B$ in Vorschubrichtung - das ist die Strecke in Vorschubrichtung gemessen an der Unterseite des Bleches, wo die erstarrte Schmelze anhaftet - wird durch $b_B = v_0 (t_2 - t_1)$, berechnet, wobei $v_0$ die Vorschubgeschwindigkeit ist. Erfindungsgemäß kann die ausströmende Schmelze zwischen den Zeitpunkten $t_1$ und $t_2$ nicht ablösen, haftet deswegen am Blech an und erstarrt. Die Zeit $t_1$ ist durch die Bedingung

$$We = We(h(z=d,t);P_0) \; < We_{crit}$$

bestimmt, wobei die Größe We

$$We = (\rho \, v_s^2) \, /( \, \sigma/h_d)$$

als Weberzahl bezeichnet wird, wobei $h_d$ die dimensionsbehaftete Dicke des Schmelzfilms an der Blechunterseite angibt. Die Zeit $t_2$ wird durch die Bedingung $We > We_{crit}$ definiert, die Zeitspanne $t_2 - t_1$ ist also das Zeitintervall, in dem $We_{crit}$ unterschritten wird. Für die Größen $v_s = G(z,t; h, P_0)$ und $h_d$ ist die Lösung aus dem physikalischen Riefenmodell in den Ausdruck für die Weberzahl einzusetzen. Der Wert $We_{crit}$ ist gesondert zu bestimmen, wozu physikalische Modelle oder experimentelle Ergebnisse herangezogen werden können.

Bei der Weberzahl We handelt es sich um eine dimensionslose Kennzahl, die als Maß für eine Tropfenverformung dient. Je größer sie ist, umso größer ist die Deformationswirkung und umso weiter hat sich der Tropfen von der Kugelform entfernt. Der Zusammenhang zwischen einer Bartbildung und der Weberzahl ist dem Fachmann bekannt.

Das angesprochene Bartvolumen $V_B$, das ist das Volumen an erstarrter Schmelze, das unterhalb des geschnittenen Bleches anhaftet, wird mit dem aufgefundenen Wert für die Bartbreite $b_B = v_0 (t_2 - t_1)$ bestimmt. Mit diesem Wert für die Bartbreite $b_B = v_0 (t_2 - t_1)$, der Ausströmgeschwindigkeit $v_s$ und der Bedingung $V_B = V(t_2 - t_1)$, wobei das Volumen $V(t_2-t_1)$ durch die im Intervall $t_2 - t_1$ an der Unterseite $z=d$ ausströmende Schmelze bestimmt ist, folgt der Wert für das Bartvolumen $V_B$.

Die Barthöhe $h_B$, das ist die Höhe der erstarrten Schmelze, die unterhalb des geschnittenen Bleches anhaftet, wird aus der Lösung $h(z=d,t)$ der Differentialgleichungen DGL sowie der Werte für die Bartbreite $b_B$ und das Bartvolumen $V_B$ berechnet.

Durch eine Projektion des zeitlichen Verlaufs von $V_B(t)$ mit einer durch die Vorschubgeschwindigkeit $v_0$ bestimmten Übertragungsfunktion, die $t$ auf $x$ abbildet, kann die räumliche Verteilung des Bartvolumens/der Barthöhe entlang der Unterkante der Schnittfläche $h_B(x)$ angegeben werden.

Weiterhin kann zum Bestimmen der Parameter, bei denen Bartbildung durch Verdampfung einsetzt, die Temperatur $T_s(t) = T(M(z=d,t)-h(z=d,t),z=d,t)$ an der Oberfläche der Schmelze bestimmt werden, wobei $T(x, z, t)$ die Temperatur in der Schmelze bezeichnet. Die Temperatur in der Schmelze wird durch Anwenden der Wärmeleitungsgleichung bestimmt. Ist $T_s > $ Verdampfungstemperatur $T_v$, so gibt es eine Bartbildung. Zur Beurteilung des virtuellen Schneidergebnisses werden aus dem virtuellen Schneidergebnis, bestehend aus $R(x,z)$ und/oder $B(x)$, eine oder mehrere Kenngröße(n) K der Riefen, z. B. Rauheit der Schnittfläche $R_z$, und des Bartes, z. B. des Bartvolumens $V_B$, Barthöhe $h_B$, Bartbreite $b_B$, abgeleitet. Die Wahl, welche Kenngröße herangezogen wird, liegt bei dem jeweiligen Anwender des Verfahrens. Die Kenngrößen werden anwenderspezifisch ausgewählt, und $R(x,z)$ und/oder $B(x)$ sind für die Beurteilung des Schneidergebnisses ausreichend.

Um das jeweilige Ergebnis eines Verfahrensablaufes noch weiter zu optimieren, werden die Schritte a) bis d) des Verfahrens, wie es in Anspruch 1 angegeben ist, mindestens einmal in einer Umgebung des Parametersatzes $P_0$ im Parameterraum P wiederholt. Hierdurch können die Sensitivitäten, definiert als partielle mathematische Ableitungen des Schneidergebnisses oder der Kenngröße(n) K nach Parametern aus P, für den Parametersatz $P_0$ angegeben werden.

Durch eine alternative Verfahrensmaßnahme, und zwar durch mathematische Analyse der Lösungsstruktur der Differentialgleichungen DGL, können diese Sensitivitäten, definiert als partielle mathematische Ableitungen des Schneidergebnisses oder der Kenngröße(n) K nach Parametern aus P, der Parameter angegeben werden.

Eine weitere alternative Verfahrensmaßnahme für die Angabe der Sensitivitäten ist diejenige durch automatisches Differenzieren. Automatisches Differenzieren ist eine dem Fachmann geläufige, mathematische Methode, um partielle mathematische Ableitungen einer Funktion zu bilden.

Um ein Bild oder ein Schriftzug auf die Schnittfläche aufzubringen, werden Werte der Parameter des Schneidens, gegebenenfalls orts- und zeitabhängige Werte, angegeben, mit der die räumliche Verteilung der Riefenamplitude auf der Schnittfläche eingestellt werden soll.

Für einen Spezialfall, bei dem die Vorgabe in einer möglichst geringen Riefenamplitude besteht, werden Parameter des Schneidens angegeben, für die die physikalische Grenze einer möglichst kleinen Riefenamplitude erreicht wird, die z. B. durch technisch unvermeidbare Schwankungen der Parameter des Schneidens begrenzt wird.

Um die Kenngröße(n) K zu berechnen, die zur Beurteilung des Schneidergebnisses entsprechend der gestellten Anforderungen herangezogen werden, besteht eine vorteilhafte Ausprägung des Verfahrens nach Anspruch 1 darin, unterschiedliche Lösungen der Differentialgleichungen DGL mit mathematischen Methoden auf ihre dynamische Stabilität für unterschiedliche Anfangswerte $h(z,t=0)=h_0(z)$ und $M(z,t=0)=M_0(z)$ hin zu analysieren. Falls instabile Lösungen existieren, lassen sich aus dem Grad der Instabilität untere Schranken für die Verteilung der Riefenamplitude $R(x,z)$ angeben und damit die jeweiligen Kenngröße(n) K berechnen.

Auch können Teilmengen von P bzw. $D_M$ angegeben werden, in denen die Vorgaben bezüglich gestellter Anforderungen an die Schnittflächen erfüllt oder zumindest angenähert werden. Solche Teilmengen von P (Parameterraum) und $D_M$ (Designraum) sind Grenzen, die der Anwender bei der Auslegung seiner Laserschneidanlage und/oder des Schneidprozesses einhalten möchte.

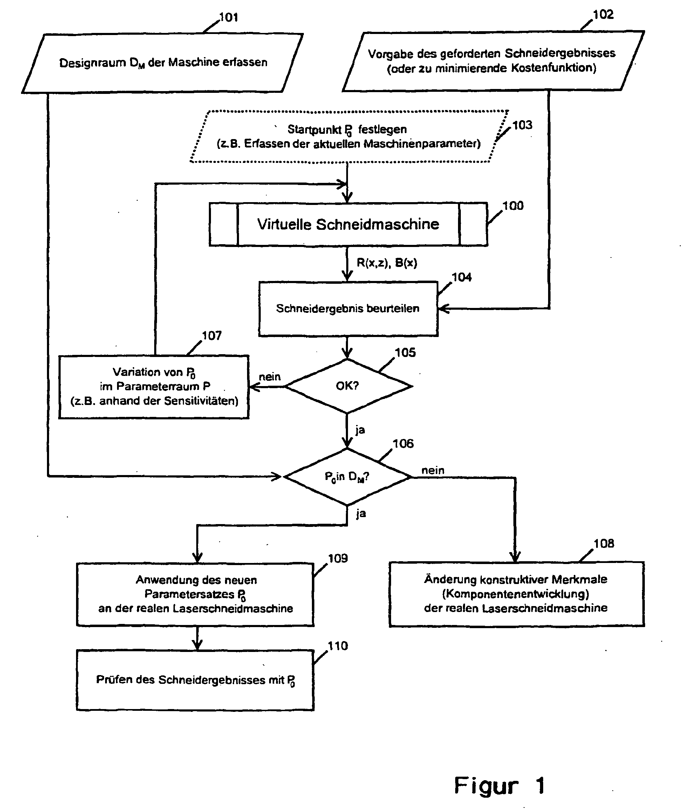

Der grundsätzliche Verfahrensablauf des erfindungsgemäßen Verfahrens wird anhand des schematischen Diagramms nachfolgend kurz erläutert, das in der beigefügten Figur 1 dargestellt ist.

Das erfindungsgemäße Verfahren, wie es in dem Diagramm dargestellt ist, setzt eine virtuelle Schneidmaschine, die mit dem Bezugszeichen 100 bezeichnet ist, ein. Für die Durchführung des Verfahrens wird zum einen der Designraum $D_M$, Schritt 101, erfasst und zum anderen wird das geforderte Schneidergebnis, Schritt 102, eingegeben. Im Schritt 102 kann auch eine zu minimierende Kostenfunktion festgelegt werden.

Um die virtuelle Schneidmaschine 100 zu starten, wird im Schritt 103 ein Startpunkt $P_0$ festgelegt, beispielsweise durch Erfassen der Maschinenparameter einer aktuellen, realen Schneidmaschine. Der Satz von Werten $P_0$ wird aus dem Parameterraum P, wie er weiter vorstehend definiert ist, ausgewählt.

Das Simulations-Programm wird gestartet, indem ein virtueller Schnitt mit der virtuellen Schneidmaschine, die auf realen Werten basieren kann, erzeugt wird. Das Simulations-Programm gibt ein Schneidergebnis aus, das die räumliche Verteilung der Riefenamplitude $R(x, z)$ auf der Schnittfläche und die räumliche Verteilung des Bartes $B(x)$ an der Unterkante der Schnittfläche beinhaltet.

Im Schritt 104 wird das Schneidergebnis beurteilt.

Im Schritt 105 wird eine Entscheidung getroffen, ob das virtuell ermittelte Schneidergebnis der Vorgabe des geforderten Schneidergebnisses (Schritt 102) entspricht. Falls dies der Fall ist, geht der Verfahrensablauf weiter zu Schritt 106, an dem geprüft wird, ob der Satz von Werten $P_0$ aus dem Parameterraum P mit dem Designraum $D_M$ der Maschine, eingegeben im Schritt 101, in Einklang steht.

Falls im Schritt 105 entschieden wird, dass das Schneidergebnis nicht dem geforderten Schneidergebnis entspricht, geht der Ablauf zu Schritt 107, in dem der Satz von Werten $P_0$ aus dem Parameterraum P variiert wird. Eine solche Variation kann beispielsweise anhand der Sensitivitäten erfolgen, die durch eines der Verfahren gemäß den Ansprüchen 6 bis 8 ermittelt werden. Die variierten Werte $P_0$ werden dann dazu verwendet, die virtuelle Schneidmaschine 100 zu betreiben.

Die Schleife über die Verfahrensschritte 105, 107 und 104 wird so lange wiederholt, bis im Schritt 105 das Schneidergebnis den geforderten Schneidergebnissen entspricht.

Falls die Abfrage im Schritt 106 verneint wird, endet das Verfahren im Schritt 108; in dem Schritt 108 wird die Aussage getroffen, dass eine konstruktive Änderung von Merkmalen der realen Laserschneidmaschine, mit deren Parametern (Designraum $D_M$) das Simulations-Programm abgelaufen ist, erforderlich ist, um die im Schritt 102 angegebene Vorgabe des geforderten Schneidergebnisses zu erfüllen oder zumindest anzunähern.

Falls die Abfrage im Schritt 106 bejaht wird, geht das Verfahren weiter zu Schritt 109; in dem Schritt 109 wird ein neuer Satz von Werten $P_0$ aus dem Parameterraum P an der realen Laserschneidmaschine angewandt, deren Parameter im Schritt 103 oder im Schritt 107 festgelegt wurden.

Im Schritt 110 wird dann ein mit der realen Laserschneidmaschine vorgenommener Schnitt geprüft.

Eine reale Schneidmaschine kann somit eingerichtet werden, indem festgestellt wird, welche Werte der Parameter aus P des Schneidens zu einer unerwünschten Ausprägung der Riefenamplitude und/oder zu einer unerwünschten Bartbildung führen und was die beste Annäherung $P_{an}$ der Parameter aus P an das gewünschte Schneidergebnis, das die theoretisch optimalen Werte $P_{opt}$ sind, darstellt.

Dazu wird der Designraum der realen Schneidmaschine bestimmt. Der Designraum der realen Schneidmaschine enthält die real einstellbaren Werte $P_{real}$ der Parameter aus P. Durch Anwendung der virtuellen Laserschneid-

maschine werden die Werte $P_{an}$ der Parameter aufgefunden, mit denen die beste Annäherung an das gewünschte Schneidergebnis erreicht wird.

Das Ergebnis wird auf der realen Schneidmaschine erprobt. Eine etwa verbleibende Diskrepanz zwischen dem gewünschten und erreichten Schneidergebnis auf der realen Schneidmaschine kann durch iterative Verfeinerung der Bestimmung des Designraums verbessert werden.

Die Erfindung ist immer dann einsetzbar, wenn beim Laserschneiden der überwiegende Anteil der Schmelze vor oder neben dem Laserstrahl ausgetrieben wird.

**Patentansprüche**

1. Verfahren zum Bestimmen des Schneidergebnisses eines Laserschneidprozesses, das anhand der Ausbildung von Erstarrungsriefen entlang der Schnittfläche und/oder einer Bartbildung an der Unterkante der Schnittfläche beurteilt wird, bei dem

   in einem Simulations-Programm eine virtuelle Laserschneidmaschine bereitgestellt wird, die mit einem Satz von Werten $P_0$ aus einem Parameterraum $P$ virtuell betrieben werden kann,

   wobei der Parameterraum $P$ definiert ist durch

$$P = (\lambda_{Laser}, I_0(t), f(x,z,t), \underline{s}(x,z,t), \underline{p}(x,z,t), P_g(x,z,t), \tau_g(x,z,t), v_0(t), d, P_{Material}) ,$$

mit

$$P_{Material} = (\rho_s, c_{ps}, \lambda_s, \rho_\ell, c_{p\ell}, \lambda_\ell, H_m, H_v, T_m, T_v, \eta, \sigma, n_{cs}, n_{c\ell}),$$

wobei

$\lambda_{Laser}$ die Wellenlänge der Laserstrahlung,
$I_0(t)$ den Maximalwert der Intensität der Laserstrahlung über die Zeit,
$f(x,z,t)$ die räumliche Verteilung der Intensität der Laserstrahlung über die Zeit,
$\underline{s}(x,z,t)$ die räumliche Verteilung der Richtung der Laserstrahlung über die Zeit,
$\underline{p}(x,z,t)$ die räumliche Verteilung des Polarisationszustandes der Laserstrahlung über die Zeit,
$P_g(x,z,t)$ der Druck des Schneidgases über die Zeit,
$\tau_g(x,z,t)$ die Scherspannung des Schneidgases über die Zeit,
$v_0(t)$ die Vorschubgeschwindigkeit, definiert als relative Geschwindigkeit zwischen Laserstrahlachse und Werkstück, über die Zeit,
$d$ die Blechdicke des zu schneidenden Materials,
$\rho_s$ die Dichte des zu schneidenden Materials im festen Zustand,
$c_{ps}$ die spezifische Wärmekapazität des Materials im festen Zustand,
$\lambda_s$ die Wärmeleitfähigkeit des Materials im festen Zustand,
$\rho_\ell$ die Dichte der Schmelze,
$c_{p\ell}$ die spezifische Wärmekapazität der Schmelze,
$\lambda_\ell$ die Wärmeleitfähigkeit der Schmelze,
$H_m$ die Schmelzenthalpie des zu schneidenden Materials,
$H_v$ die Verdampfungsenthalpie des zu schneidenden Materials,
$T_m$ die Schmelztemperatur des zu schneidenden Materials,
$T_v$ die Verdampfungstemperatur des zu schneidenden Materials,
$\eta$ die dynamische Viskosität der Schmelze,
$\sigma$ die Oberflächenspannung der Schmelze,
$n_{cs}$ der komplexe Brechungsindex des Materials im festen Zustand,
$n_{c\ell}$ der komplexe Brechungsindex der Schmelze bezeichnen, und wobei
$x$ die Koordinate in Richtung der Relativbewegung zwischen Material und Laserstrahlachse und
$z$ die Koordinate senkrecht zur Materialoberseite, sowie
$t$ die Zeit

bezeichnen,
und bei dem, um die virtuelle Schneidmaschine zu starten, in einem

Schritt a) ein Startpunkt $P_0$ festgelegt wird, beispielsweise durch Erfassen der Maschinenparameter einer aktuellen, realen Schneidmaschine, wobei der Satz von Werten $P_0$ aus der Parameterraum P, wie er vorstehend definiert ist, ausgewählt wird, für den Ablauf des Simulations-Programms der Parametersatz $P_0$ in die virtuelle Schneidmaschine eingegeben wird,
und

**gekennzeichnet durch** Schritt b), in dem das Simulations-Programm gestartet wird, indem ein virtueller Schnitt mit der virtuellen Schneidmaschine, die auf realen Werten basieren kann, erzeugt wird, wobei die zeitliche Entwicklung der Schmelzfilmdicke h=h(z,t) und der Position M=M(z,t) der Schmelzfront am Scheitel der Schneidfront in Abhängigkeit der Schnitttiefe z ($0<z<d$, d Blechdicke) und der Zeit t aus den auf $v_0$ normierten partiellen Differentialgleichungen DGL

$$\frac{\partial h}{\partial t} + G(z,t;h,P_0)\frac{\partial h}{\partial z} + D(z,t;h,P_0) = v_p, \quad \frac{\partial M}{\partial t} = v_p - 1$$

mit Anfangs- und Randwerten

$$h(z,t=0)=h_0(z), \ M(z,t=0)=M_0(z)$$

$$h(z=0,t)=0, \qquad M(z=0,t)=m_0(t;P_0)$$

wobei $h_0(z)$ und $M_0(z)$ beliebige Anfangsverteilungen, $m_0(t;P_0)$ die Position der Oberkante der Schneidfront, $v_p=v_p(z,t)$ die Geschwindigkeit der Schmelzfront, $v_s=G(z,t; h, P_0)$ die Strömungsgeschwindigkeit an der Oberfläche der Schmelze und $D(z,t;h,P_0)$ eine Dämpfung der Schmelzfilmdynamik bezeichnen,
für einen gegebenen Parametersatz $P_0$ aus P berechnet wird,
und dann in einem
Schritt c) **durch** eine Projektion des zeitlichen Verlaufs der Absorptionsfront, definiert als die Position M(z,t)-h(z,t), auf die Schnittfläche mit einer **durch** die Vorschubgeschwindigkeit $v_0$ bestimmten Übertragungsfunktion, die t auf x abbildet, die räumliche Verteilung der Riefenamplitude R(x,z) auf der Schnittfläche angegeben wird und/oder
aus dem zeitlichen Verlauf der Schmelzfilmdicke h(z=d,t) und der Ausströmgeschwindigkeit G(z=d,t; h(z=d,t), $P_0$) an der Unterkante der Schnittfläche eine räumliche Verteilung des Bartes B(x) an der Unterkante der Schnittfläche berechnet wird,
und in einem
Schritt d) ein virtuelles Schneidergebnis, welches R(x,z) und/oder B(x) umfasst, für eine weitere Auswertung bereitgestellt wird,

wobei in einem weiteren Schritt Werte der Parameter aus dem Parameterraum P des Laserschneidprozesses zum Erzielen definierter Schnittflächen und/oder zum Bestimmen der mit einer vorgegebenen Laserschneidmaschine erzielbaren Schnittflächen und/oder zum Auslegen von Komponenten einer optimierten Laserschneidmaschine, die die Vorgaben bezüglich gestellter Anforderungen an die Schnittflächen erfüllt oder zumindest annähert, bestimmt werden, indem die Schritte a) bis d) mit jeweils veränderten Parametern aus dem Parameterraum P wiederholt werden,
und wobei Regeln zur Weiter- und/oder Neuentwicklung von Komponenten einer realen Laserschneidmaschine aus den Werten der Parameter aus dem Parameterraum P des Laserschneidprozesses zum Erzielen definierter Schnittflächen, die die Vorgaben bezüglich gestellter Anforderungen an die Schnittflächen erfüllen oder zumindest annähern, abgeleitet werden, falls die ermittelten Werte nicht auf eine reale Laserschneidmaschine mit maschinenspezifischen Parametern, bezeichnet als maschinenspezifischen Designraum $D_M$, übertragbar sind, wobei $D_M$ die Teilmenge von P ist, die ohne konstruktive Änderungen an der realen Laserschneidmaschine erreichbar ist.

2. Verfahren nach Anspruch 1, **dadurch gekennzeichnet, dass** die Dämpfung $D(z,t;h,P_0)$ in den Differentialgleichungen DGL auf Null gesetzt wird.

3. Verfahren nach Anspruch 1 oder 2, **dadurch gekennzeichnet, dass** zum Berechnen der räumlichen Verteilung des Bartes B(x) an der Unterkante der Schnittfläche die Weberzahl We(t) als hydrodynamische Kenngröße mit Hilfe von $h(z=d,t)$, $G(z=d,t; h(z=d,t), Po)$ und $P_{Material}$ bestimmt wird.

4. Verfahren nach Anspruch 1 oder 2, **dadurch gekennzeichnet, dass** zum Bestimmen der Parameter, bei denen Bartbildung durch Verdampfung einsetzt, die Temperatur $Ts(t)=T(M(z=d,t)-h(z=d,t),z=d,t)$ an der Oberfläche der Schmelze bestimmt wird, wobei $T(x, z ,t)$ die Temperatur in der Schmelze bezeichnet.

5. Verfahren nach einem der Ansprüche 1 bis 4, **dadurch gekennzeichnet, dass** aus dem virtuellen Schneidergebnis, bestehend aus R(x,z) und/oder B(x), eine oder mehrere Kenngröße(n) K der Riefen und des Bartes zur Beurteilung des virtuellen Schneidergebnisses abgeleitet werden.

6. Verfahren nach einem der Ansprüche 1 bis 5, **dadurch gekennzeichnet, dass** die Schritte a) bis d) mindestens einmal in einer Umgebung des Parametersatzes $P_0$ im Parameterraum P wiederholt werden, um die Sensitivitäten, definiert als partielle mathematische Ableitungen des Schneidergebnisses oder der Kenngröße(n) K nach Parametern aus P, für den Parametersatz $P_0$ anzugeben.

7. Verfahren nach einem der Ansprüche 1 bis 5, **dadurch gekennzeichnet, dass** durch mathematische Analyse der Lösungsstruktur der Differentialgleichungen DGL die Sensitivitäten, definiert als partielle mathematische Ableitungen des Schneidergebnisses oder der Kenngröße(n) K nach Parametern aus P, für den Parametersatz $P_0$ angegeben werden.

8. Verfahren nach einem der Ansprüche 1 bis 5, **dadurch gekennzeichnet, dass** durch automatisches Differenzieren die Sensitivitäten, definiert als partielle mathematische Ableitungen des Schneidergebnisses oder der Kenngröße(n) K nach Parametern aus P, für den Parametersatz $P_0$ angegeben werden.

9. Verfahren nach Anspruch 1, **dadurch gekennzeichnet, dass** Werte der Parameter des Schneidens, mit denen die räumliche Verteilung der Riefenamplitude auf der Schnittfläche eingestellt und damit ein Bild oder ein Schriftzug auf die Schnittfläche aufgebracht wird, angegeben werden.

10. Verfahren nach Anspruch 1, **dadurch gekennzeichnet, dass** die Werte der Parameter des Schneidens angegeben werden, für die die physikalische Grenze einer möglichst kleinen Riefenamplitude erreicht wird.

11. Verfahren nach einem der Ansprüche 5 bis 8, **dadurch gekennzeichnet, dass** Lösungen der Differentialgleichungen DGL mit mathematischen Methoden auf ihre dynamische Stabilität für unterschiedliche Anfangswerte $h(z,t=0)=h_0(z)$ und $M(z,t=0)=M_0(z)$ hin analysiert werden, um die Kenngröße(n) K zu berechnen, wobei dann, falls instabile Lösungen existieren, sich aus dem Grad der Instabilität untere Schranken für die Verteilung der Riefenamplitude R(x,z) angeben lassen und damit die jeweilige(n) Kenngröße(n) K berechnet werden kann (können).

12. Verfahren nach Anspruch 1, **dadurch gekennzeichnet, dass** Teilmengen von P und/oder $D_M$ angegeben werden, in denen die Vorgaben bezüglich gestellter Anforderungen an die Schnittflächen erfüllt oder zumindest angenähert werden.

**Claims**

1. A method for determining the cut quality of a laser cutting process, said quality being assessed on the basis of the formation of solidification ridges along the cut face and/or burr formation on the lower edge of the cut face, where in a simulation program a virtual laser cutting machine is provided that can be operated virtually with a set of values $P_0$ from a parameter space P,
wherein the parameter space P is defined by

$$P = (\lambda_{Laser}, I_0(t), f(x,z,t), \underline{s}(x,z,t), \underline{p}(x,z,t), P_g(x,z,t), \tau_g(x,z,t), v_0(t), d, P_{Material}) \ ,$$

where

$$P_{Material} = (\rho_s, c_{ps}, \lambda_s, \rho_\ell, c_{p\ell}, \lambda_\ell, H_m, H_v, T_m, T_v, \eta, \sigma, n_{cs}, n_{c\ell},$$

where

$\lambda_{Laser}$ represents the wavelength of the laser radiation,
$I_0(t)$ the maximum value of the laser radiation intensity over time,
$f(x,z,t)$ the spatial distribution of the laser radiation intensity over time,
$s(x,z,t)$ the spatial distribution of the direction of the laser radiation over time,
$\underline{p}(x,z,t)$ the spatial distribution of the polarization state of the laser radiation over time,
$P_g(x,z,t)$ the cutting gas pressure over time,
$\tau_g(x,z,t)$ the shear stress of the cutting gas over time,
$v_0(t)$ the feed rate, defined as the relative velocity between the laser beam axis and the workpiece over time,
$d$ the thickness of the sheet metal to be cut,
$\rho_s$ the density of the material to be cut in the solid state,
$c_{ps}$ the specific heat capacity of the material in the solid state,
$\lambda_s$ the thermal conductivity of the material in the solid state,
$\rho_\ell$ the density of the melt,
$c_{p\ell}$ the specific heat capacity of the melt,
$\lambda_\ell$ the thermal conductivity of the melt,
$H_m$ the melting enthalpy of the material to be cut,
$H_v$ the evaporation enthalpy of the material to be cut,
$T_m$ the melting temperature of the material to be cut,
$T_v$ the evaporation temperature of the material to be cut,
$\eta$ the dynamic viscosity of the melt,
$\sigma$ the surface tension of the melt,
$n_{cs}$ the complex refractive index of the material in the solid state,
$n_{c\ell}$ the complex refractive index of the melt,
and where
x represents the coordinate in the direction of the relative movement between the material and the laser beam axis and
z the coordinate perpendicular to the top of the material, and
t represents the time,

and to start the virtual cutting machine in a

step a) a start point $P_0$ is specified, for example by detecting the machine parameters for a current real cutting machine, wherein the set of values of $P_0$ is selected from the parameter space P as is defined above, and the parameter set $P_0$ is entered into the virtual cutting machine for the sequence of the simulation program,
and **characterized in that** in a
step b) the simulation program is started by creating a virtual cut with the virtual cutting machine, which can be based on real values, wherein the developing of the melt film thickness over time h=h(z,t) and of the position M=M(z,t) of the melt front at the apex of the cutting front as a function of the cut depth z (0<z<d, d sheet metal thickness) and of the time t from partial differential equations PDE normalized to $v_0$

$$\frac{\partial h}{\partial t} + G(z,t;h,P_0)\frac{\partial h}{\partial z} + D(z,t;h,P_0) = v_p, \quad \frac{\partial M}{\partial t} = v_p - 1$$

with initial and boundary values

$$h(z,t=0)=h_0(z), \ M(z,t=0)=M_0(z)$$

$$h(z=0,t)=0, \ M(z=0,t)=m_0(t;P_0)$$

where $h_0(z)$ and $M_0(z)$ represent any initial distributions, $m_0(t;P_0)$ the position of the upper edge of the cutting front, $v_p=v_p(z,t)$ the velocity of the melt front, $v_s=G(z,t; h, P_0)$ the flow velocity at the surface of the melt and $D(z,t;h,P_0)$ a damping of the melt film dynamics, for a given parameter set $P_0$ is calculated from P,
and then in a
step c) by a projection of the time course of the absorption front, defined as the position $M(z,t)-h(z,t)$, onto the cut face with a transfer function determined by the feed rate $v_0$ that depicts t on x, the spatial distribution of the ridge amplitude $R(x,z)$ on the cut face is specified
and/or
a spatial distribution of the burr $B(x)$ at the lower edge of the cut face is calculated from the time course of the melt film thickness $h(z=d,t)$ and the outflow velocity $G(z=d,t; h(z=d,t), P_0)$ at the lower edge of the cut face,
and in a
step d) a virtual cutting result comprising $R(x,z)$ and/or $B(x)$, is provided for further assessment,

wherein in a further step values of the parameters from the parameter space P of the laser cutting process for the purpose of obtaining defined cut faces and/or for determining the cut faces that can be achieved with a specified laser cutting machine, and/or for configuring components of an optimized laser cutting machine that meets or at least approximates the specifications regarding requirements for the cut faces by repeating steps a) to d) each with changed parameters from the parameter space P,
and wherein rules are derived for the continued and/or new development of components of a real laser cutting machine from the values of the parameters from the parameter space P of the laser cutting process for obtaining defined cut faces that meet or at least approximate the specifications regarding requirements on the cut faces, if the derived values cannot be transferred to a real laser cutting machine with machine-specific parameters, known as machine-specific design space $D_M$, where $D_M$ is the subset of P that can be achieved without structural changes to the real laser cutting machine.

2.  A method as set forth in claim 1, **characterized in that** the damping $D(z,t;h,P_0)$ is set to zero in the differential equations DE.

3.  A method as set forth in claim 1 or 2, **characterized in that** in order to calculate the spatial distribution of the burr $B(x)$ at the lower edge of the cut face, the Weber number $We(t)$ is determined as the hydro-dynamic characteristic using $h(z=d,t)$, $G(z=d,t; h(z=d,t), P_0)$ and $P_{Material}$.

4.  A method as set forth in claim 1 or 2, **characterized in that** for determining the parameters at which burr formation through evaporation begins, the temperature $Ts(t)=T(M(z=d,t)-h(z=d,t),z=d,t)$ is determined on the surface of the melt, where $T(x,z,t)$ represents the temperature in the melt.

5.  A method as set forth in one of the claims 1 to 4, **characterized in that** one or more characteristic/characteristics K of the ridges and of the burr are derived for the assessment of the virtual cut quality from the virtual cutting result consisting of $R(x,z)$ and/or $B(x)$.

6.  A method as set forth in one of the claims 1 to 5, **characterized in that** steps a) to d) are repeated at least once in a vicinity of the parameter set $P_0$ in the parameter space P, in order to specify for the parameter set $P_0$ the sensitivities, defined as partial mathematical derivations of the cutting result or the characteristic/characteristics K according to parameters from P.

7.  A method as set forth in one of the claims 1 to 5, **characterized in that** through mathematical analysis of the solution structure of the differential equations DE, the sensitivities, defined as partial mathematical derivations of the cutting result or the characteristic/characteristics K according to parameters from P are specified for the parameter set $P_0$.

8.  A method as set forth in one of the claims 1 to 5, **characterized in that** through automatic differentiating the sensitivities, defined as partial mathematical derivations of the cutting result or the characteristic/characteristics K according to parameters from P are specified for the parameter set $P_0$.

9. A method as set forth in claim 1, **characterized in that** values of the parameters of the cut that are used to set the spatial distribution of the ridge amplitude on the cut face are specified, and used to apply an image or a logo on the cut face.

10. A method as set forth in claim 1, **characterized in that** the values of the parameters of the cut are specified for which the physical limits of the smallest possible ridge amplitude are achieved.

11. A method as set forth in one of the claims 5 to 8, **characterized in that** solutions of the differential equations DE are analyzed for their dynamic stability for different initial values $h(z,t=0)=h_0(z)$ and $M(z,t=0)=M_0(z)$ using mathematical methods in order to calculate characteristic/characteristics K, where then, in case unstable solutions exist, lower limits for the distribution of the ridge amplitude $R(x,z)$ can be specified based on the degree of instability and thus the respective characteristic/characteristics can be calculated.

12. A method as set forth in claim 1, **characterized in that** subsets of P and/or $D_M$ are specified, which meet or at least approximate the specifications with regard to the requirements regarding the cut faces.

**Revendications**

1. Procédé de détermination du résultat de coupe d'un processus de coupe au laser, qui est estimé à l'aide de la formation de cannelures de solidification le long de la surface de coupe et/ou d'une formation de barbe sur le bord inférieur de la surface de coupe, selon lequel

dans un programme de simulation, on utilise une machine de coupe au laser virtuelle, qui peut être mise en fonction virtuellement grâce à un ensemble de valeurs $P_0$ faisant partie d'un espace paramétrique P,

dans lequel l'espace paramétrique P est défini par

$$P=(\lambda_{Laser}, I_0(t),\ f(x,z,t),\ \underline{s}(x,z,t),\ \underline{p}(x,z,t),\ P_g(x,z,t),\ T_g(x,z,t),\ v_0(t), d,\ P_{Material}),$$

avec

$$P_{Material} = (\rho_s,\ c_{ps},\ \lambda_s,\ \rho_\ell,\ c_{p\ell},\ \lambda_\ell,\ H_m,\ H_v,\ T_m,\ T_v,\ \eta,\ \sigma,\ n_{cs},\ n_{c\ell}),$$

dans lequel

$\lambda_{Laser}$ représente la longueur d'onde du rayon laser,
$I_0(t)$ représente la valeur maximale de l'intensité du rayon laser dans le temps,
$f(x,z,t)$ représente la répartition spatiale de l'intensité du rayon laser dans le temps,
$s(x,z,t)$ représente la répartition spatiale de la direction du rayon laser dans le temps,
$\underline{p}(x,z,t)$ représente la répartition spatiale de l'état de polarisation du rayon laser dans le temps,
$P_g(x,z,t)$ représente la pression du gaz de découpe dans le temps,
$\tau_g(x,z,t)$ représente la contrainte de cisaillement du gaz de découpe dans le temps,
$v_0(t)$ représente la vitesse d'avance, définie en tant que vitesse relative entre l'axe du faisceau laser et la pièce à usiner, dans le temps,
d représente l'épaisseur de tôle du matériau à couper,
d représente l'épaisseur de tôle du matériau à couper,
$\rho_s$ représente l'épaisseur du matériau à couper à l'état solide,
$c_{ps}$ représente la capacité thermique spécifique du matériau à l'état solide,
$\lambda_s$ représente la conductivité thermique du matériau à l'état solide,
$\rho_\ell$ représente l'épaisseur de la fusion,
$c_{p\ell}$ représente la capacité thermique spécifique de la fusion,
$\lambda_\ell$ représente la conductivité thermique de la fusion,
$H_m$ représente l'enthalpie de fusion du matériau à couper,

$H_v$ représente l'enthalpie d'évaporation du matériau à couper,

$T_m$ représente la température de fusion du matériau à couper,

$T_v$ représente la température d'évaporation du matériau à couper,

$\eta$ représente la viscosité dynamique de la fusion,

$\sigma$ représente la tension superficielle de la fusion,

$n_{cs}$ représente l'indice de réfraction complexe du matériau à l'état solide,

$n_{c\ell}$ représente l'indice de réfraction complexe de la fusion,

et dans lequel

x représente la coordonnée dans la direction du mouvement relatif entre le matériau et l'axe du faisceau laser et

z représente la coordonnée verticale par rapport à la partie supérieure du matériau, et

t représente le temps,

et selon lequel, pour démarrer la machine de coupe virtuelle, dans

une étape a) un point de départ $P_0$ est déterminé, par exemple par détection des paramètres de machine d'une machine de coupe réelle effective, dans lequel l'ensemble des valeurs $P_0$ faisant partie de l'espace paramétrique P, comme il a été défini précédemment, est sélectionné, et l'ensemble des paramètres $P_0$ est introduit dans la machine de coupe virtuelle pour le déroulement du programme de simulation,

et **caractérisé par**

une étape b) dans laquelle le programme de simulation est démarré, dans lequel une coupe virtuelle est effectuée avec la machine de coupe virtuelle, qui peut se baser sur des valeurs réelles, dans lequel le développement temporel de l'épaisseur du film de fusion h=h(z,t) et de la position M=M(z,t) du front de fusion au sommet du front de coupe est calculé pour un ensemble de paramètres donnés $P_0$ faisant partie de P selon la profondeur de coupe z (0<z<d, d épaisseur de tôle) et du temps t à partir des équations différentielles DGL partielles normalisées sur $v_0$

$$\frac{\partial h}{\partial t} + G(z,t; h, P_0)\frac{\partial h}{\partial z} + D(z,t; h, P_0) = v_p, \quad \frac{\partial M}{\partial t} = v_p - 1$$

avec les valeurs initiales et marginales

$$h(hz,t=0)=h_0(z), \ M(z,t=0)=M_0(z)$$

$$h(z=0,t)=0, \quad M(z=0,t)=m_0(t;P_0)$$

où $h_0(z)$ et $M_0(z)$ représentent les répartitions initiales préférées, $m_0(t;P_0)$ représente la position du bord supérieur du front de coupe, $v_p=v_p(z,t)$ représente la vitesse du front de coupe, $v_s=G(z,t; h,P_0)$ représente la vitesse de courant à la surface de la fusion et $D(z,t;h,P_0)$ représente un ralentissement de la dynamique du film de fusion, et ensuite

dans une étape c) la répartition spatiale de l'amplitude des cannelures R(x,z) à la surface de coupe est donnée par une projection de la variation temporelle du front d'absorption, définie en tant que position M(z,t)-h(z,t), sur la surface de coupe grâce à une fonction de transfert, qui reproduit t sur x, déterminée par la vitesse d'avance $v_0$, et/ou

une répartition spatiale de la barbe B(x) sur le bord inférieur de la surface de coupe est calculée à partir de la variation temporelle de l'épaisseur de film de fusion h(z=d,t) et de la vitesse d'évacuation G(z=d,t; h(z=d,t), $P_0$) sur le bord inférieur de la surface de coupe,

et

dans une étape d) un résultat de coupe virtuel, qui comprend R(x,z) et/ou B(x), est délivré pour une autre estimation,

dans lequel, dans une autre étape, des valeurs des paramètres faisant partie de l'espace paramétrique P du processus de coupe au laser sont définies pour atteindre des surfaces de coupe définies et/ou pour déterminer les surfaces de coupe à atteindre par une machine de découpe au laser prédéterminée et/ou pour prévoir les composants d'une machine de découpe au laser optimisée, qui remplit ou au moins approche les prescriptions des exigences demandées pour les surfaces de coupe, où les étapes a) à d) sont répétées avec des paramètres modifiés respectifs faisant partie de l'espace paramétrique P,

et dans lequel des règles sont dérivées en vue de la poursuite du développement et/ou d'un nouveau développement des composants d'une machine de découpe au laser réelle à partir des valeurs des paramètres faisant partie de l'espace paramétrique P du processus de coupe au laser pour atteindre des surfaces de coupe définies, qui remplissent ou au moins approchent les prescriptions des exigences demandées pour les surfaces de coupe, au cas où les valeurs déterminées ne sont pas transposables à une machine de découpe au laser réelle avec des paramètres spécifiques à la machine, définis comme espace de conception $D_M$ spécifique à la machine, où $D_M$ est le sous-ensemble de P, qui peut être obtenu sans modifications constructives de la machine de découpe au laser réelle.

2. Procédé selon la revendication 1, **caractérisé en ce que** le ralentissement $D(z,t;h,P_0)$ est fixé à zéro dans les équations différentielles DGL.

3. Procédé selon la revendication 1 ou 2, **caractérisé en ce que** le nombre de Weber $We(t)$ est déterminé en tant que valeur hydrodynamique à l'aide de $h(z=d,t)$, $G(z=d,t; h(z=d,t), P_0)$ et $P_{Material}$ pour le calcul de la répartition spatiale de la barbe $B(x)$ sur le bord inférieur de la surface de coupe.

4. Procédé selon la revendication 1 ou 2, **caractérisé en ce que** la température $Ts(t)=T(M(z=d,t)-(h(z=d,t),z=d,t)$ est définie à la surface de la fusion, où $T(x,z,t)$ représente la température de la fusion, pour déterminer les paramètres, selon lesquels la formation de la barbe est produite par évaporation.

5. Procédé selon l'une des revendications 1 à 4, **caractérisé en ce qu'**une ou plusieurs valeurs K des cannelures et de la barbe sont dérivées pour estimer le résultat de découpe virtuel à partir du résultat de coupe virtuel, constitué par $R(x,z)$ et/ou $B(x)$.

6. Procédé selon l'une des revendications 1 à 5, **caractérisé en ce que** les étapes a) à d) sont répétées au moins une fois au voisinage de l'ensemble de paramètres $P_0$ dans l'espace paramétrique P, pour indiquer les sensibilités, définies en tant que dérivations mathématiques partielles du résultat de coupe ou de la ou des valeurs K selon les paramètres faisant partie de P, pour l'ensemble de paramètres $P_0$.

7. Procédé selon l'une des revendications 1 à 5, **caractérisé en ce que** les sensibilités, définies en tant que dérivations mathématiques partielles du résultat de coupe ou de la ou des valeurs K d'après les paramètres faisant partie de P, sont indiquées pour l'ensemble de paramètres $P_0$ grâce à l'analyse mathématique de la structure en solution des équations différentielles DGL.

8. Procédé selon l'une des revendications 1 à 5, **caractérisé en ce que** les sensibilités, définies en tant que dérivations mathématiques partielles du résultat de coupe ou de la ou des valeurs K d'après les paramètres faisant partie de P, sont indiquées pour l'ensemble de paramètres $P_0$ grâce à une différenciation automatique.

9. Procédé selon la revendication 1, **caractérisé en ce que** les valeurs des paramètres de coupe, grâce auxquels la répartition spatiale de l'amplitude des cannelures à la surface de coupe est réglée et ainsi une image ou une inscription sur la surface de coupe est appliquée, sont indiquées.

10. Procédé selon la revendication 1, **caractérisé en ce que** les valeurs des paramètres de coupe sont indiquées, pour lesquelles la limite physique d'une amplitude de cannelures la plus petite possible étape est obtenue.

11. Procédé selon l'une des revendications 5 à 8, **caractérisé en ce que** les solutions des équations différentielles DGL sont analysées avec des méthodes mathématiques concernant leur stabilité dynamique pour des valeurs initiales différentes $h(z,t=0)=h_0(z)$ et $M(z,t=0)=M_0(z)$, pour calculer la ou les valeurs K, dans lequel ensuite, au cas où des solutions instables existent, des limites inférieures pour la répartition de l'amplitude des cannelures $R(x,z)$ sont indiquées selon le degré d'instabilité et ainsi la ou les valeurs respectives K peuvent être calculées.

12. Procédé selon la revendication 1, **caractérisé en ce que** des sous-ensembles de P et/ou de $D_M$ sont indiqués, dans lesquels les prescriptions concernant les exigences demandées relatives aux surfaces de coupe sont remplies ou au moins sont approchées.

Designraum $D_M$ der Maschine erfassen

Vorgabe des geforderten Schneidergebnisses
(oder zu minimierende Kostenfunktion)

Startpunkt $P_0$ festlegen
(z.B. Erfassen der aktuellen Maschinenparameter)

Virtuelle Schneidmaschine

$R(x,z)$, $B(x)$

Schneidergebnis beurteilen

Variation von $P_0$
im Parameterraum P
(z.B. anhand der Sensitivitäten)

nein

OK?

ja

$P_0$ in $D_M$?

nein

ja

Anwendung des neuen
Parametersatzes $P_0$
an der realen Laserschneidmaschine

Änderung konstruktiver Merkmale
(Komponentenentwicklung)
der realen Laserschneidmaschine

Prüfen des Schneidergebnisses mit $P_0$

Figur 1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0929376 B1
- US 5854751 A
- JP 4052091 A

**In der Beschreibung aufgeführte Nicht-Patentliteratur**

- Modeling and simulation of process monitoring and Control in laser cutting. **W. SCHULTZ et al.** Non linear Dynamic of Production system. VCH erlag GmbH & Co. KGaA, 2004, 411-426
- Simulation of Laser Cutting. **SCHULZ, W.** The Theory of Laser Materials Processing. Springer Series in Materials Science, 2009, vol. 119, 21-69
- **SCHULZ, W.** Dynamics or ripple formation and melt flow in laser beam cutting. *J. Phys. D: Appl. Phys.,* 1999, vol. 32, 1219-1228
- Modeling and Simulation of Process Monitoring and Control in Laser Cutting. **W. SCHULZ et al.** Nonlinear Dynamics of production systems. VCH Verlag GmbH & Co. KGaA